# EUROPEAN PATENT SPECIFICATION

(11) **EP 3 491 965 B1**
(45) Date of publication and mention of the grant of the patent: **03.03.2021**
(21) Application number: 17833574.1
(22) Date of filing: 27.07.2017
(51) Int. Cl.: A47B 47/00, A47B 87/02, A47B 47/04, F16B 12/12

(54) **COMBINED CABINET**
KOMBINIERTER SCHRANK
ARMOIRE COMBINÉE

(30) Priority: 29.07.2016 CN 201620810840 U; 14.06.2017 CN 201720694341 U
(43) Date of publication of application: 05.06.2019
(73) Proprietor: Zhang, Xuefeng, Beijing Beijing 100123 (CN)
(72) Inventor: Zhang, Xuefeng, Beijing Beijing 100123 (CN)
(74) Representative: Isern Patentes y Marcas S.L.
(86) International application number: PCT/CN2017/094717
(87) International publication number: WO 2018/019271

(56) References cited:
- EP-A1- 0 206 327
- CH-A5- 678 162
- CN-A- 1 656 976
- CN-A- 105 029 928
- CN-A- 105 029 928
- CN-Y- 2 461 380
- CN-Y- 2 464 163
- CN-Y- 2 464 163
- FR-A1- 2 704 030
- GB-A- 1 329 476
- JP-A- 2004 305 337
- JP-U- S4 857 320
- US-A- 4 331 244

## Description

### Technical Field

The present invention belongs to the field of furniture and connection structures thereof, and in particular relates to a combined cabinet.

### Background

The combined cabinet, as the name implies, is an entity formed by integrating two or more cabinets for different purposes, which reduces the ground area occupied by the cabinet without loss of functionality. For the small apartments, that are popular nowadays, the combined cabinet has the function of saving indoor space. Currently, commonly used combined cabinets include combined bookcase and computer desk, combined bookcase and desk, combined wardrobe and dressing table, combined tatami and bed, etc.

Documents CH678162A5, CN2464163Y, CN105029928A or JPS4857320U21 describe combined cabinets disclosed in the prior art. Document EP0206327A1 describes drawable units with rod and sleeves. There is a problem in the use of the existing combined cabinets. In order to ensure a sufficient storage space inside the combined cabinet, the volume of the combined cabinet is designed to be larger than that of a single cabinet. However, modern people migrate frequently and they have to remove their furniture every time they change their residence. It is very inconvenient to remove and transport the combined cabinet having a large volume.

The combined cabinet is formed by splicing a plurality of cabinet units. If the cabinet units are connected to each other by grooves and connecting projections, when the combined cabinet is separated, the connecting projections are pulled out from corresponding positions, and the cabinet units are separated, sequentially. There is a problem in the use of this kind of combined cabinet. In order to ensure the flatness of the cabinet surface of the combined cabinet, both ends of the connecting projection should be aligned with the cabinet surface. However, as the combined cabinet is generally placed against the wall, it is inconvenient to pull out the connecting projections due to lack of points of force application, thereby causing inconvenience in separating the combined cabinet.

### Summary

An objective of the present invention is to provide a combined cabinet which is convenient to remove and transport. The present invention provides a combined cabinet according to claim 1,further features of the invention are set out in the dependent claims.

The above objective of the present invention is realized by the following technical solutions.

A combined cabinet includes cabinet units and connecting devices. Each connecting device includes L-shaped corner protectors and embedding pillars respectively arranged at four corners of an outer side of each cabinet unit. Three parts, namely, adjacent sides of any two L-shaped corner protectors and an outer wall of each cabinet unit form a trapezoid embedding groove, the embedding pillar with a double-trapezoid cross section is embedded in the trapezoid embedding groove, and two adjacent cabinet units are connected by the embedding pillar.

By using the above technical solution, the whole combined cabinet is divided into a plurality of cabinet units, and the cabinet units are connected to each other by the connecting devices. When the combined cabinet needs to be removed and transported, the combined cabinet can be divided into a plurality of cabinet units. The volume and weight of each cabinet unit are much smaller than that of the combined cabinet, which makes it much more convenient for removing and transportation. The connecting device includes four corner protectors connected to the outer wall of each cabinet unit and the embedding pillars. Firstly, the trapezoid connection structure has the features of high strength and high matching precision, so for the plurality of cabinet units connected by the trapezoid connection structure, the stability and the matching precision of the connection between the cabinet units can be improved, thereby realizing convenient removing and transportation of the combined cabinet, while having good durability and comfortable appearance. Secondly, the corner protector, the embedding pillar, and the body of the cabinet unit are configured separately. Such type of structure is convenient for processing, and the corner protector can further protect the cabinet units, thereby further improving the durability of the combined cabinet. Moreover, by using the embedding pillar, when two adjacent cabinet units need to be connected or separated, only the embedding pillar needs to be inserted or pulled out from the embedding groove in a straight line. The steps are simple, which can save time and manpower to a certain extent.

The present invention is further configured as follows: an inserting plate having a trapezoid cross section is embedded in the embedding groove.

By using the above technical solution, after the assembly of the cabinet is completed, the embedding groove formed by the corner protectors is present on the cabinet unit at the outermost layer. The inserting plate can fill the embedding groove, which further increases the strength of the combined cabinet and makes the combined cabinet more artistic.

The present invention is further configured as follows: a bracket for separating the combined cabinet from the ground is further connected below the combined cabinet.

By using the above technical solution, if the combined cabinet is directly placed on the ground, it will cause inconveniences in two aspects. In the first aspect, it is inconvenient to clean the bottom and surrounding areas of the combined cabinet. In the second aspect, if the ground is wet, moisture will accelerate the aging of the combined cabinet and affect the objects stored in the combined cabinet. Therefore, it is necessary to provide the bracket to lift the cabinet off the ground. The bracket may be connected by embedding to the embedding groove in the bottom of the cabinet units at the bottommost layer.

The present invention is further configured as follows: each cabinet unit is provided with an opening at a front end, and the opening is provided with a covering plate, a cabinet door, a drawer, or a separating plate.

By using the above technical solution, a part of the cabinet units may be selected to provide with the covering plate, the cabinet door, the drawer or the separating plate, so that people can combine freely according to their desires.

The present invention is further configured as follows: each cabinet unit is also provided with an opening at a rear end, and the opening is provided with a covering plate or a cabinet door.

By using the above technical solution, the arbitrariness of the combination of the combined cabinets is further increased. Several cabinet units are selected to be configured in the form of opening at both ends, so that people can fetch and place objects from either side of the combined cabinet. By selecting several cabinet units to be configured with a double-opening structure, not only makes it easier to fetch and place the objects, but also can effectively store the objects placed therein. If only one side of the cabinet unit is required to be opened, several cabinet units may be selected to be provided with a covering plate on the opening at one side. Drawers, separating plates and cabinet doors may be provided in several cabinet units which have opening at both ends or at one end, so the various combinations can fully satisfy the daily use.

In order to further solve the problem of inconvenient disassembly of the cabinet units, the extraction of the connecting block is configured to be more convenient on the basis that the connecting device does not affect the flatness of the cabinet surface, thus making the disassembly of the combined cabinet more convenient. According to the invention, the embedding pillar is provided with a drawable unit. The drawable unit includes a sleeve fixedly connected to an interior of the embedding pillar, a drawable rod slidably connected to an interior of the sleeve, and an elastic extend-retract assembly provided in the sleeve for driving the drawable rod to extend or retract. When the end of the drawable rod is pressed to make the drawable rod extended, the length of the drawable rod is long enough to be held by a human hand.

By using the above technical solution, the drawable rod can be extended by pressing to serve as a point of force application for holding by a human hand. The hand pulls the drawable rod, and the drawable rod is pulled out together with the connecting block by the sleeve, so that the combined cabinet can be separated and used conveniently. According to the invention, one side of the embedding groove is filled with a wooden wedge to avoid displacement of the embedding pillar.

By using the above technical solution, during the use of the drawable unit, when the hand presses the end of the drawable rod, the embedding pillar cannot slide. In practical use, as the number of times of separating the cabinet increases, the contact surface between the connecting block and the embedding groove will get smoother. In this case, it is difficult to ensure the stability of the connecting block when pressed, that is why the wooden wedge is placed at one end of the embedding groove. The tight fitness of the wooden wedge and the embedding groove can prevent the embedding pillar from sliding, which can make the drawable unit work reliably.

The present invention is further configured as follows: the sleeve is symmetrically provided with two sets of drawable rods and elastic extend-retract assemblies for driving the drawable rods.

By using the above technical solution, when the combined cabinet is placed against the wall, if the side of the pulling device for pressing by the hand is placed near the wall due to the negligence of people, people cannot use the drawable unit in this case. In order to solve this problem, the drawable unit is configured to have a structure that can extend or retract at both sides, which makes the use of the combined cabinet more convenient.

The present invention is further configured as follows: the elastic extend-retract assembly includes a backing plate, a spring, a position locking member, a pressing member, and a limiting member. The backing plate is parallel to the end surface of the sleeve and tightly fitted at the middle part of the sleeve, and the spring is placed on the backing plate. The position locking member includes an inserting pillar and four inserting plates which are arranged on the outer wall of the inserting pillar in a circle with the axis of the inserting pillar as the center of the circle. The end of the inserting plate away from the spring is configured as a wedge-shaped surface. The pressing member includes a drawable rod, eight stopping blocks which are arranged on the outer periphery of the drawable rod in a circle with the axis of the drawable rod as the center of the circle, and equally spaced wedge-shaped teeth distributed at one end of the drawable rod near the position locking member. There are eight wedge-shaped teeth in total, and the positions of the eight wedge-shaped teeth correspond to the positions of the stopping blocks, and the inclined surfaces of the wedge-shaped teeth are fitted with the wedge-shaped surfaces of the inserting plate. The limiting member includes a locking cover having an opening at one end, four equally spaced limiting grooves and four equally spaced sliding channels arranged on the inner wall of the locking cover. The limiting grooves and the sliding channel are distributed alternately, and form an equal spacing. The side of the locking cover that is away from the opening is provided with a through hole, and the drawable rod can pass through the through hole. The drawable rod drives the stopping block to slide in the groove formed by the limiting grooves and the sliding channels, and the inserting pillar drives the inserting plate to slide in the space formed by the four sliding channels.

By using the above technical solution, when the drawable unit is used, by pressing an end of the drawable rod protruding out of the sleeve by hand, the drawable rod linearly slides by the cooperation of the stopping block, the limiting grooves, and the sliding channels, and pushes the inserting pillar to drive the inserting plate to slide in the sliding channels. The inserting pillar pushes the spring downwards. When the inserting plate is completely separated from the sliding channel, the inserting pillar drives the inserting plate to rotate at a 45° angle under the combined action of the wedge-shaped teeth on the drawable rod and the wedge-shaped surface on the inserting plate. Namely, the inserting plate precisely corresponds to the position of the limiting groove. In this case, the end of the drawable rod is kept retracted to be aligned with the end surface of the connecting block. When the drawable rod is pressed again, the drawable rod makes the inserting pillar drive the inserting plate to rotate at a 45° angle under the cooperation of the wedge-shaped teeth on the drawable rod and the wedge-shaped surface on the inserting plate. In this case, the inserting plate precisely corresponds to the position of the sliding groove, the compression state of the spring is released to push the inserting pillar to drive the inserting plate to slide in the sliding channel, and finally make the pressure plate extend out. By cycling and reciprocating, the drawable rod can extend or retract, continuously. When the drawable rod extends out, the inserting pillar can be held and pulled out by hand.

The present invention is further configured as follows: the drawable unit is made of plastic.

By using the above technical solution, since the cooperation structure of the drawable unit is complex, it is more convenient to manufacture with a plastic mold.

The present invention is further configured as follows: the combined cabinet further includes a protection plate which covers the periphery of an integral whole formed of all the cabinets units.

By using the above technical solution, the covering plate makes the periphery of the combined cabinet more flat, and convenient for use.

The present invention has the following advantages. The combined cabinet integration is divided into multiple cabinet units, and the cabinet units are connected to each other by connecting devices. When the combined cabinet needs to be removed and transported, the combined cabinet can be divided into a plurality of cabinet units. The volume and weight of each cabinet unit are much smaller than that of the combined cabinet, which is makes it much more convenient for removing and transporting. The connecting device includes four corner protectors connected to the outer wall of each cabinet unit and the embedding pillars. Firstly, the trapezoid connection structure has the features of high strength and high matching precision, so for the plurality of cabinet units using the trapezoid connection structure, the stability and the matching precision of the connection between the cabinet units can be improved, thereby realizing convenient removing and transportation of the combined cabinet, while having good durability and comfortable appearance. Secondly, the corner protector, the embedding pillar, and the body of the cabinet unit are configured separately. Such type of structure is convenient for processing, and the corner protector can further protect the cabinet units, thereby further improving the durability of the combined cabinet. Moreover, by using the embedding pillar, when two adjacent cabinet units need to be connected or separated, only the embedding pillar needs to be inserted or pulled out from the embedding groove in a straight line. The steps are simple, which can save time and manpower to a certain extent. Meanwhile, the drawable rod can be pulled out by pressing, and the drawable rod can serve as a point of force application which is held by hand. When the drawable rod is pulled by hand, the drawable rod drives the connecting block to be pulled out through the sleeve, in this way, the combined cabinet can be separated, which is more convenient for use.

### Brief Description of the Drawings

Fig. 1 is a schematic diagram showing the overall structure of an illustrative example not according to the invention;
Fig. 2 is a structural schematic diagram showing a coordination of a cabinet unit and corner protectors of an illustrative example not according to the invention;
Fig. 3 is a structural schematic diagram of an embedding pillar according to an illustrative example not according to the invention;
Fig. 4 is a schematic diagram showing a coordination of the combined cabinet and the bracket according to a second illustrative example not according to the invention;
Fig. 5 is a front view of the combined cabinet according to the present invention;
Fig. 6 is a view showing an extended connecting block of the drawable assembly;
Fig. 7 is an axonometric view of the drawable assembly;
Fig. 8 is an exploded view of the drawable assembly;
Fig. 9 is a view showing a structure of a pressing member and a limiting member;
Fig. 10 is a cross-sectional view of a combined cabinet showing a coordination structure of a connecting block and a wooden wedge according to the present invention;
Fig. 11 is a structural schematic diagram of the drawable unit according to the present invention; and
Fig. 12 is a cross-sectional view of the combined cabinet showing the coordination structure of the connecting block and the wooden wedge according to the invention.

In the figures, 1. cabinet unit; 11. embedding groove; 12. inserting plate; 13. bracket; 14. covering plate; 15. cabinet door; 16. drawer; 17. separating plate; 2. connecting device; 21. L-shaped corner protector; 22. embedding pillar; 3. drawable unit; 30. sleeve; 31. drawable rod; 32. elastic extend-retract assembly; 320. backing plate; 321. spring; 322. position locking member; 3220. inserting pillar; 3221. inserting plate; 3222. wedge-shaped surface; 323. pressing member; 3230. stopping block; 3231. wedge-shaped teeth; 324. limiting member; 3240. locking cover; 3241. sliding channel; 3242. limiting groove; 4. wooden wedge; 5. protection plate.

### Detailed Description of the Embodiments

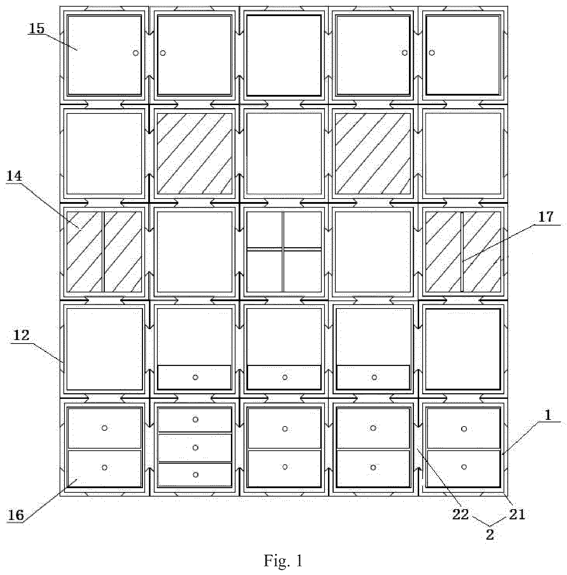

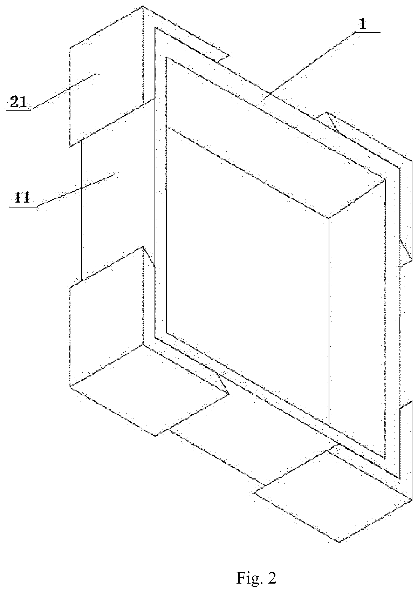

The present invention will be further described below in detail with reference to the drawings. A combined cabinet, the connecting device can be applied to the combined cabinet, and the combined cabinet may be a functional wardrobe, a television cabinet, a wine cabinet, a book cabinet, a kitchen cabinet, etc. The combined cabinet may be made of wood, plastic, metal, synthetic materials or composite materials. Referring to Fig. 1 , Fig. 2 and Fig. 3 , the combined cabinet includes a plurality of cabinet units 1 , and the cabinet units 1 are square-tube-shaped and are provided with openings on both sides. The cabinet units 1 are spliced and combined according to multiples and proportions. The cabinet units may be freely combined according to the size and shape of the indoor space in specific applications. The cabinet units 1 are connected to each other by a connecting device 2 pairwise. The connecting device 2 includes L-shaped corner protectors 21 and embedding pillars 22 respectively arranged at four corners outer side each unit cabinet unit 1. The L-shaped corner protectors 21 may be made of materials such as wood or metal and are connected to the cabinet unit 1 by bolts or glue layers. Three objects including the adjacent sides of any two L-shaped corner protectors 21 and an outer wall of the cabinet unit 1 together form a trapezoid embedding groove 11. An embedding pillar 22 with a double-trapezoid cross section is embedded in the trapezoid embedding groove 11, and two adjacent cabinet units 1 are connected by the embedding pillar 22. Such type of combined cabinet is better placed in the middle of the indoor space to act as a partition, and it is easy to fetch and put objects.

Referring to Fig. 1, after the assembly of the combined cabinet is completed, the embedding groove 11 formed by the corner protectors is presented on the cabinet units 1 at the outermost layer. Here, we have designed an inserting plate 12 having a trapezoid cross section. The inserting plate 12 can be inserted into the embedding groove 11 to make the two corner protectors and the inserting plate 12 form a flat surface, thereby increasing the strength of the combined cabinet and making the combined cabinet more artistic.

Referring to Fig. 1, in daily life, some objects need to be stored in a dark, dust-proof space. For this reason, we can provide all or part of the cabinet units 1 with cabinet doors 15, and the cabinet door 15 may have the following forms. First, a rotating shaft is provided on the side of the opening of the cabinet unit 1, and the cabinet door 15 is a side-hung door pivotally connected to the rotating shaft. Second, the rotating shaft is provided on the middle of the opening of the cabinet unit 1, and the cabinet door 15 is a revolving door that rotates around the rotating shaft. Third, two symmetrical sliding grooves are respectively provided on the top wall and the bottom wall of the opening of the cabinet unit 1, and the cabinet door 15 is a sliding door that is engaged in the sliding channel. The cabinet door 15 can be made of wood, metal, or glass.

If the combined cabinet is placed against the wall, the cabinet door 15 may be provided only on one side of the opening of the cabinet unit 1. In this way, three parts, i.e. the wall, the frame body of the cabinet unit 1, and the cabinet door 15 can form a closed space protected from light and dust. If the combined cabinet is placed in the middle of the room, the cabinet doors 15 may be provided on both sides of the cabinet unit 1. The cabinet door 15 may also be provided on the opening at one side of the cabinet unit 1 and the covering plate 14 may be provided on the opening at the other side. The covering plate 14 may be embedded in the cabinet unit 1 or may be connected to the cabinet unit 1 by glue or screws. Thus, the cabinet door 15, the frame body of the cabinet unit 1, and the covering plate 14 can form a closed space. The drawer 16 may be selected to form the closed space as well, and one or more layers of drawers 16 may be provided in one cabinet unit 1. Here, the specific number of layers of the drawers 16 provided in each cabinet unit 1 may be set according to the size of the cabinet unit 1 or the size of the objects to be stored.

Referring to Fig. 1, in daily life, sometimes some small objects need to be stored, if they are directly put in the cabinet unit 1, the entire space of the cabinet unit 1 would be occupied, thus causing waste of space. Moreover, if many objects are stored in one cabinet unit 1, it is not easy to find the objects needed. For this reason, we can provide a separating plate 17 in all or some of the cabinet units 1, and the shape of the separating plate 17 may be freely defined. For example, the cabinet unit 1 may be divided into two storage chambers by using a flat plate, or, the cabinet unit 1 may be divided into four storage chambers by using a cross separating plate 17. In the production of the separating plate 17, the outer frame of the separating plate 17 should be slightly larger than the inner frame of the cabinet unit 1, so the separating plate 17 can be directly embedded in the cabinet unit 1 without the need to provide the embedding groove 11 in the cabinet unit 1. By doing so, not only the strength of the cabinet unit can be ensured, but also the processing steps and processing costs are reduced. In this way, we can store small objects into different storage chambers according to categories, which can save the internal space of the cabinet unit 1 and make it easy to search the objects needed.

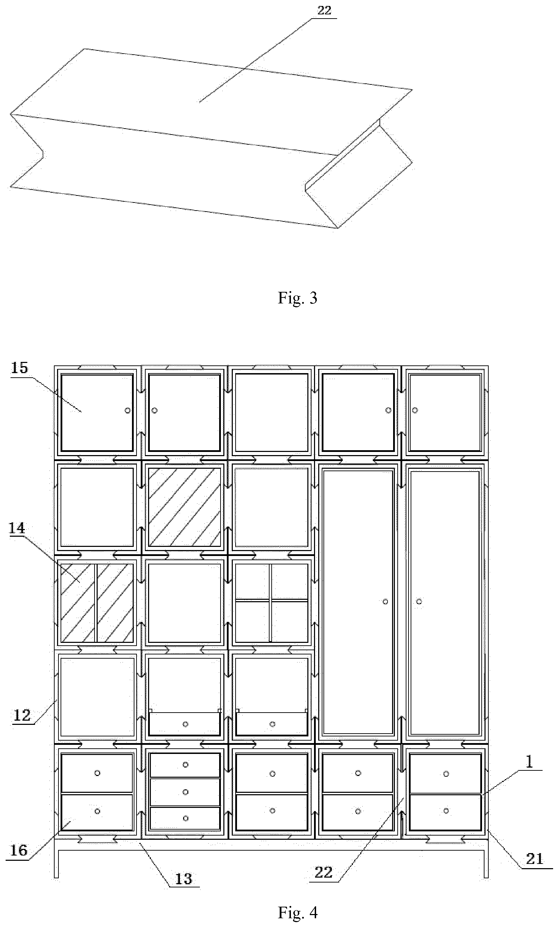

Referring to Fig. 4, a bracket 13 is provided at the bottom of the combined cabinet for the purpose of protecting the combined cabinet and conveniently cleaning the bottom and the surrounding of the comnbined cabinet. The bracket 13 may be made of wood or a metal material. The bracket 13 may be manufactured in single piece and then the combined cabinet is placed on it. Or, the bracket 13 and the combined cabinet may be provided separately. The side of the bracket 13 closest to the cabinet units 1 at the bottommost layer is configured with a structure of double-trapezoid embedding pillar 22. In this way, the connection of the bracket 13 and the cabinet unit 1 is realized. The adaptability is improved by making full use of the connection forms of the cabinet unit 1. In one combined cabinet, the size and shape of the cabinet unit 1 may be set according to specific desires, and the L-shaped corner protector 21, the embedding pillar 22, and the inserting plate 12, which are adapted to the cabinet unit, may be made according to actual situations as well. In the combined cabinet, some cabinet units 1 may be made with a size several times larger than the remaining cabinet units, such as 2 times, 3 times, etc, and these parts of cabinet units 1 may be used as a wardrobe in a vertical arrangement or used as a storage cabinet for storing large objects in a lateral arrangement. It is also possible to increase or decrease parts of the cabinet units 1 in the combined cabinet according to the functional requirements, so that the shape of the combined cabinet is more random and variable, which is convenient for use in life.

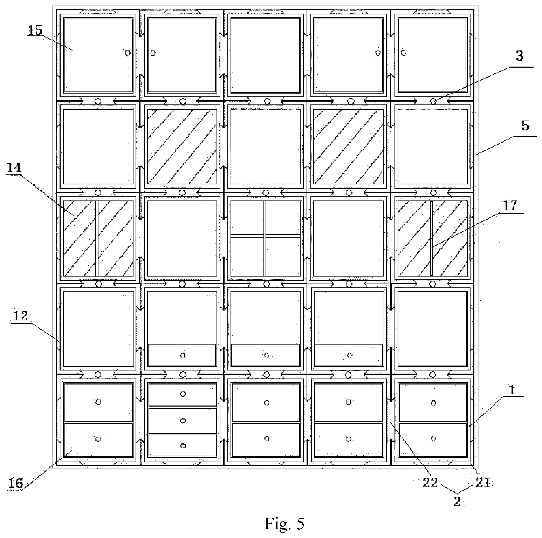

Referring to Fig. 5, the combined cabinet is formed by splicing a plurality of cabinet units 1, and two adjacent cabinet units 1 are connected to each other by the embedding groove 11 and the embedding pillar 22. The combined cabinet further includes a protection plate 5 covering the periphery of the integration formed by the cabinet units 1. The protection plate 5 and the cabinet unit 1 are connected by the structure of the embedding groove 11 and the embedding pillar 22, and the protection plate 5 makes the periphery of the combined cabinet flat, which is convenient for use.

In the separation of a certain combined cabinet, the cabinet units 1 may be separated by withdrawing the embedding pillar 22 at the joints. In practical use, generally, the cabinet surface of the combined cabinet is flat, and the combined cabinet is placed against the wall. In this case, it is inconvenient to withdraw the embedding pillar 22 because of the lack of the point of force application, thus the separation of the combined cabinet is inconvenient. In order to solve this problem, a drawable unit 3 is provided in the embedding pillar 22.

The drawable unit 3 is fixedly connected to the embedding pillar 22, and the drawable unit 3 can extend or retract. When the drawable unit 3 retracts, the end portion of the drawable unit 3 is aligned with the cabinet surface of the combined cabinet. When the drawable unit 3 extends, the end portion of drawable unit 3 extends out of the combined cabinet, and in this case, the operator can hold the end protion of the drawable unit 3 by hand, and pull the drawable unit 3 along an outward direction. The drawable unit 3 is pulled out together with the embedding pillar 22.

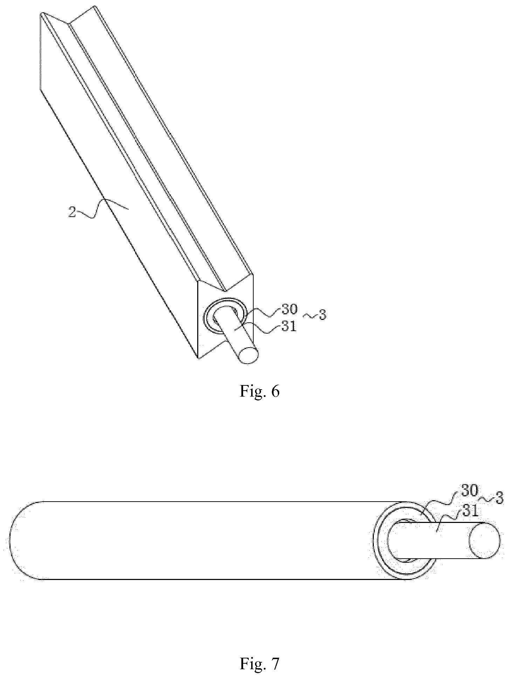

Referring to Fig. 6, in order to make the connection of two adjacent cabinet units 1 firm, in an example not according to the invention, the length of the embedding pillar 22 is equal to the width of the cabinet unit 1, namely, the width of the combined cabinet. When the drawable unit 3 retracts, the end portion of the drawable unit 3 is aligned with the end portion of the embedding pillar 22. When the drawable unit 3 extends out, the distance at which the end portion extends out from the embedding pillar 22 is determined for the effective holding of the human hand.

The extension of the end portion of the drawable unit 3 is performed in a manner of pressing the end portion of the drawable unit by a human hand. In practical use, the combined cabinet has two types of placement: placing against the wall, or placing in the middle of the room as a partition. When the combined cabinet is placed against the wall, the hand presses the end portion of the drawable unit 3, the static frictional resistance of the embedding pillar 22 and the adjacent two cabinet units cooperates with the hand pressing to make the end portion of the drawable unit 3 extend out finally.

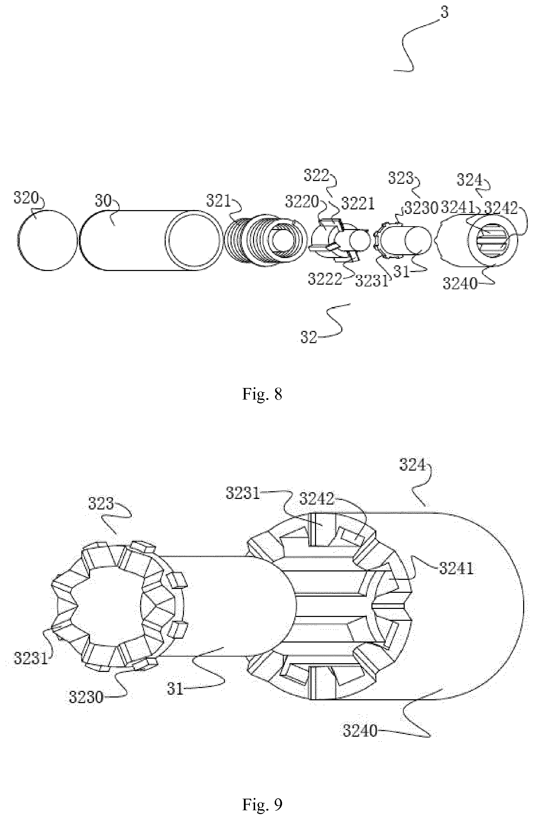

Referring to Figs. 7 and 8, the drawable unit 3 is made of plastic, which includes a sleeve 30 fixedly connected to the embedding pillar 22, a drawable rod 31 slidably connected to an interior of the sleeve 30, and an elastic extend-retract assembly 32 provided in the sleeve 30 for driving the drawable rod 31 to extend or retract. The elastic extend-retract assembly 32 includes a backing plate 320, a spring 321, a position locking member 322, a pressing member 323, and a limiting member 324. The backing plate 320 is parallel to the end surface of the sleeve 30 and tightly fitted in the middle of the sleeve 30. The spring 321 is placed on the backing plate 320. Referring to Fig. 9, the position locking member 322 includes an inserting pillar 3220 with a pillar shape and four inserting plates 3221 arranged on the outer wall of the inserting pillar 3220 in a circle with the axis of the inserting pillar 3220 as the center of the circle. The end of the inserting plate 3221 away from the spring 321 is configured as a wedge-shaped surface 3222. The pressing member 323 includes eight stopping blocks 3230 arranged on the outer periphery of the drawable rod 31 in a circle with the axis of the drawable rod 31 as the center of the circle, and equally spaced wedge-shaped teeth 3231 distributed at one end of the drawable rod 31 near the position locking member 322. In total, there are eight wedge-shaped teeth 3231. The positions of the eight wedge-shaped teeth 3231 correspond to the positions of the stopping blocks 3230. The inclined surfaces of the wedge-shaped teeth 3231 are fitted with the wedge-shaped surfaces 3222 of the inserting plate 3221. The limiting member 324 includes a locking cover 3240 with an opening at one end, four equally spaced limiting grooves 3242 and four equally spaced sliding channels 3241 that are arranged on the inner wall of the locking cover 3240. The limiting grooves 3242 and the sliding channels 3241 are distributed alternately and have equal spacing. The side of the locking cover 3240 away from the opening is provided with a through hole. The drawable rod 31 pass through the through hole. The drawable rod 31 drives the stopping block 3230 to slide in the groove formed by the limiting grooves 3242 and the sliding channels 3241, and the inserting pillar 3220 drives the inserting plate 3221 to slide in the space formed by the four sliding channels 3241.

When the drawable unit 3 is used, by pressing the end of the drawable rod 31 extending out of the sleeve 30 by a human hand, the drawable rod 31 linearly slides by the cooperation of the stopping block 3230, the limiting groove 3242, and the sliding channel 3241, and pushes the inserting pillar 3220 to drive the inserting plate 3221 to slide in the sliding channel 3241. The inserting pillar 3220 pushes the spring 321 downwards. When the inserting plate 3221 is completely separated from the sliding channel 3241, the inserting pillar 3220 drives the inserting plate 3221 to rotate at a 45° angle under the combined action of the wedge-shaped teeth 3231 on the drawable rod 31 and the wedge-shaped surface 3222 on the inserting plate 3221. Namely, the inserting plate 3221 precisely corresponds to the position of the limiting groove 3242. In this case, the end portion of the drawable rod 31 is kept retracted and is aligned with the end surface of the embedding pillar 22. When the drawable rod 31 is pressed again, the drawable rod 31 makes the inserting pillar 3220 to drive the inserting plate 3221 to rotate at a 45° angle under the cooperation of the wedge-shaped teeth 3231 on the drawable rod 31 and the wedge-shaped surface 3222 on the inserting plate 3221. In this case, the inserting plate 3221 precisely corresponds to the position of the sliding channel 3241, the compression state of the spring 321 is released to push the inserting pillar 3220 to drive the inserting plate 3221 to slide in the sliding channel 3241, and finally the drawable rod 31 extends out. By cycling and reciprocating, the drawable rod 31 can extend or retract, continuously. When the drawable rod 31 extends out, the human hand can hold the drawable rod 31 and pull out the inserting pillar 22.

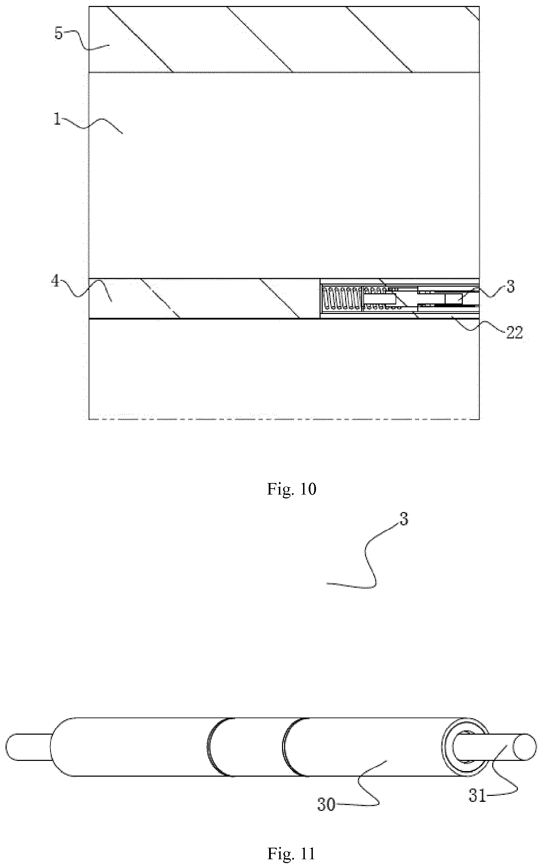

According to the invention, referring to Fig. 10, in order to make the embedding pillar 22 enable to provide a sufficient pressing reaction force for the drawable unit 3 when the hand presses the drawable unit 3, the wooden wedge 4 is filled in the hole formed by enclosing the embedding grooves of the adjacent two cabinet units 1. Thus, the wooden wedge 4 can provide a sufficient reaction force for the drawable unit 3.

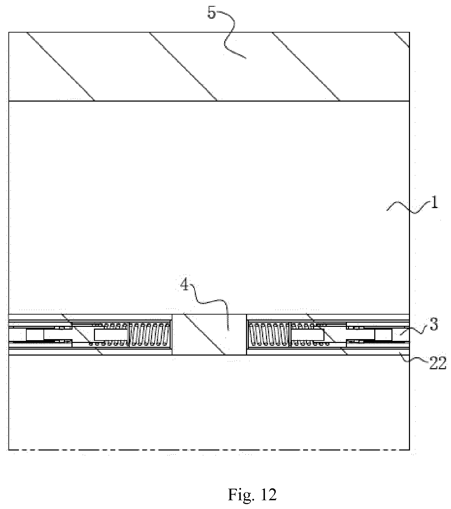

Referring to Fig. 11 and Fig. 12, when the combined cabinet is placed against the wall, if the side of the drawable device 3 for pressing by the hand is placed near the wall due to the negligence of people, the drawable unit 3 cannot be used. In order to solve this problem, the drawable unit 3 is configured with a structure that both sides can extend or retract. Namely, the two sets of the drawable rods 31 and the elastic extend-retract assemblies 32 are symmetrically provided in the sleeve 30 with the backing plate 320 as a symmetrical reference. It should be noted that the reaction force provided through the cooperation of the embedding pillar 22 and the combined cabinet should be greater than the force of the human hand pressing the drawable unit.

## Claims

1. A combined cabinet, comprising cabinet units (1) and connecting devices (2), wherein
each connecting device (2) comprises L-shaped corner protectors (21) and embedding pillars (22) respectively arranged at four corners of an outer side of each cabinet unit (1), three parts, namely, adjacent sides of any two L-shaped corner protectors (21) and an outer wall of each cabinet unit (1) form a trapezoid embedding groove (11), each embedding pillar (22) with a double-trapezoid cross section is embedded in the trapezoid embedding groove (11), and two adjacent cabinet units (1) are connected by the embedding pillar (22);
**characterized in that** the embedding pillar (22) is provided with a drawable unit (3), the drawable unit (3) comprises a sleeve (30) fixedly connected to an interior of the embedding pillar (22), a drawable rod (31) slidably connected to an interior of the sleeve (30), and an elastic extend-retract assembly (32) provided in the sleeve (30) for driving the drawable rod (31) to extend or retract, wherein when an end of the drawable rod (31) is pressed to make the drawable rod (31) extended, a length of the drawable rod (31) is long enough to be held by a human hand; and wherein one side of the embedding groove (21) is filled with a wooden wedge (4) to avoid a displacement of the embedding pillar (21)..

2. The combined cabinet of claim 1, wherein, an inserting plate (12) having a trapezoid cross section is embedded in the embedding groove (11).

3. The combined cabinet of claim 1, wherein, a bracket (13) for separating the combined cabinet with the ground is further connected below the combined cabinet.

4. The combined cabinet of claim 1, wherein, each cabinet unit (1) is provided with an opening at a front end, and the opening is provided with a covering plate (14), a cabinet door (15), a drawer (16), or a separating plate (17).

5. The combined cabinet of claim 4, wherein, each cabinet unit (1) is provided with an opening at a rear end, and the opening is provided with a covering plate (14) or a cabinet door (15).

6. The combined cabinet of claim 1, wherein, the sleeve (30) is symmetrically provided with two sets of drawable rods (31) and elastic extend-retract assemblies (32) for driving the drawable rods (31).

7. The combined cabinet of any one of claims 1 or 6 , wherein, the elastic extend-retract assembly (32) comprises a backing plate (320), a spring (321), a position locking member (322), a pressing member (323) and a limiting member (324), wherein
the backing plate (320) is parallel to an end surface of the sleeve (30) and tightly fitted at a middle part of the sleeve (30);
the spring (321) is placed on the backing plate (320);
the position locking member (322) comprises an inserting pillar (3220) and four inserting plates (3221) arranged on an outer wall of the inserting pillar (3220) in a circle with an axis of the inserting pillar (3220) as a center of the circle, and an end of the inserting plate (3221) away from the spring (321) is configured as a wedge-shaped surface (3222);
the pressing member (323) comprises eight stopping blocks (3230) arranged on an outer periphery of the drawable rod (31) in a circle with the axis of the drawable rod (31) as the center of the circle, and equally spaced wedge-shaped teeth (3231) distributed at an end of the drawable rod (31) near the position locking member (322); there are eight wedge-shaped teeth (3231) in total, positions of the eight wedge-shaped teeth (3231) correspond to positions of the stopping blocks (3230), and inclined surfaces of the wedge-shaped teeth (3231) are fitted with wedge-shaped surfaces (3222) of the inserting plate (3221); and
the limiting member (324) comprises a locking cover (3240) with an opening at an end, four equally spaced limiting grooves (3242) and four equally spaced sliding channels (3241) arranged on an inner wall of the locking cover (3240); wherein the limiting grooves (3242) and the sliding channels (3241) are distributed alternately, and form an equal spacing; a side of the locking cover (3240) away from the opening is provided with a through hole, the drawable rod (31) passes through the through hole; the drawable rod (31) drives the stopping blocks (3230) to slide in grooves formed by the limiting grooves (3242) and the sliding channels (3241), and the inserting pillar (3220) drives the inserting plate (3221) to slide in a space formed by the four sliding channels (3241).

8. The combined cabinet of claim 7, wherein, the drawable unit (3) is made of plastic.

9. The combined cabinet of claim 8 wherein, the combined cabinet further comprises a protection plate (5), the protection plate covers a periphery of an integral whole formed by all the cabinets unit (1).

## Patentansprüche

1. Kombinierter Schrank, umfassend Schrankeinheiten (1) und Verbindungsvorrichtungen (2), wobei
jede Verbindungsvorrichtung (2) L-förmige Eckschutzvorrichtungen (21) und Einbettungssäulen (22) umfasst, die jeweils an vier Ecken einer Außenseite jeder Schrankeinheit (1) angeordnet sind, drei Teile, nämlich benachbarte Seiten von zwei beliebigen L-förmigen Eckschutzvorrichtungen (21) und eine Außenwand jeder Schrankeinheit (1), eine trapezförmige Einbettungsnut (11) bilden, jede Einbettungssäule (22) mit einem doppelt-trapezförmigen Querschnitt in die trapezförmige Einbettungsnut (11) eingebettet ist und zwei benachbarte Schrankeinheiten (1) durch die Einbettungssäule (22) verbunden sind;
**dadurch gekennzeichnet, dass** die Einbettungssäule (22) mit einer ziehbaren Einheit (3) versehen ist, die ziehbare Einheit (3) eine Hülse (30) umfasst, die fest mit einem Inneren der Einbettungssäule (22) verbunden ist, eine ziehbare Stange (31) verschiebbar mit einem Inneren der Hülse (30) verbunden ist und eine elastische Auszieh-/Einziehanordnung (32) in der Hülse (30) bereitgestellt ist, um die ziehbare Stange (31) zum Ausziehen oder Einziehen anzutreiben, wobei, wenn auf ein Ende der ziehbaren Stange (31) Druck ausgeübt wird, um die ziehbare Stange (31) auszuziehen, eine Länge der ziehbaren Stange (31) lang genug ist, um von einer menschlichen Hand gehalten zu werden; und wobei eine Seite der Einbettungsnut (21) mit einem Holzkeil (4) gefüllt ist, um eine Verschiebung der Einbettungssäule (21) zu vermeiden.

2. Kombinierter Schrank nach Anspruch 1, wobei in die Einbettungsnut (11) eine Einsetzplatte (12) mit trapezförmigem Querschnitt eingebettet ist.

3. Kombinierter Schrank nach Anspruch 1, wobei eine Halterung (13) zum Trennen des kombinierten Schranks mit der Erde unterhalb des kombinierten Schranks weiter verbunden ist.

4. Kombinierter Schrank nach Anspruch 1, wobei jede Schrankeinheit (1) an einem vorderen Ende mit einer Öffnung versehen ist und die Öffnung mit einer Abdeckplatte (14), einer Schranktür (15), einer Schublade (16) oder einer Trennplatte (17) versehen ist.

5. Kombinierter Schrank nach Anspruch 4, wobei jede Schrankeinheit (1) an einem hinteren Ende mit einer Öffnung versehen ist und die Öffnung mit einer Abdeckplatte (14) oder einer Schranktür (15) versehen ist.

6. Kombinierter Schrank nach Anspruch 1, wobei die Hülse (30) symmetrisch mit zwei Sätzen von ziehbaren Stangen (31) und elastischen Auszieh/Einziehanordnungen (32) zum Antreiben der ziehbaren Stangen (31) versehen ist.

7. Kombinierter Schrank nach einem der Ansprüche 1 oder 6, wobei die elastische Auszieh-/Einziehanordnung (32) eine Trägerplatte (320), eine Feder (321), ein Positionssperrelement (322), ein Presselement (323) und ein Begrenzungselement (324) umfasst, wobei
die Trägerplatte (320) parallel zu einer Endfläche der Hülse (30) ist und an einem mittleren Teil der Hülse (30) fest angebracht ist;
die Feder (321) auf der Trägerplatte (320) angeordnet ist;
das Positionssperrelement (322) eine Einsetzsäule (3220) und vier Einsetzplatten (3221) umfasst, die an einer Außenwand der Einsetzsäule (3220) in einem Kreis mit einer Achse der Einsetzsäule (3220) als Mittelpunkt des Kreises angeordnet sind, und ein von der Feder (321) entferntes Ende der Einsetzplatte (3221) als keilförmige Oberfläche (3222) konfiguriert ist;
das Presselement (323) acht Stoppblöcke (3230), die an einem Außenumfang der ziehbaren Stange (31) in einem Kreis mit der Achse der ziehbaren Stange (31) als Mittelpunkt des Kreises angeordnet sind, und gleich beabstandete keilförmige Zähne (3231) umfasst, die an einem Ende der ziehbaren Stange (31) nahe dem Positionssperrelement (322) verteilt sind; insgesamt acht keilförmige Zähne (3231) vorhanden sind, wobei Positionen der acht keilförmigen Zähne (3231) Positionen der Stoppblöcke (3230) entsprechen, und geneigte Oberflächen der keilförmigen Zähne (3231) mit keilförmigen Oberflächen (3222) der Einsetzplatte (3221) ausgestattet sind; und
das Begrenzungselement (324) eine Verriegelungsabdeckung (3240) mit einer Öffnung an einem Ende, vier gleichmäßig beabstandete Begrenzungsnuten (3242) und vier gleichmäßig beabstandete Gleitkanälen (3241) umfasst, die an einer Innenwand der Verriegelungsabdeckung (3240) angeordnet sind; wobei die Begrenzungsnuten (3242) und die Gleitkanäle (3241) abwechselnd verteilt sind und einen gleichen Abstand bilden; eine von der Öffnung entfernte Seite der Verriegelungsabdeckung (3240) mit einem Durchgangsloch versehen ist, wobei die ziehbare Stange (31) durch das Durchgangsloch verläuft; die ziehbare Stange (31) die Stoppblöcke (3230) antreibt, um in Nuten zu gleiten, die durch die Begrenzungsnuten (3242) und die Gleitkanäle (3241) gebildet sind, und die Einsetzsäule (3220) die Einsetzplatte (3221) antreibt, um in einem Raum zu gleiten, der durch die vier Gleitkanäle (3241) gebildet ist.

8. Kombinierter Schrank nach Anspruch 7, wobei, die ziehbare Einheit (3) aus Kunststoff gefertigt ist.

9. Kombinierter Schrank nach Anspruch 8, wobei der kombinierte Schrank ferner eine Schutzplatte (5) umfasst, die Schutzplatte einen Umfang eines integralen Ganzen abdeckt, das von allen Schrankeinheiten (1) gebildet wird.

## Revendications

1. Armoire combinée, comprenant des unités d'armoire (1) et des dispositifs de raccordement (2), dans laquelle
chaque dispositif de raccordement (2) comprend des protecteurs angulaires en forme de L (21) et des piliers d'encastrement (22) respectivement disposés aux quatre angles d'un côté externe de chaque unité d'armoire (1), trois parties, à savoir, les côtés adjacents de deux quelconques protecteurs angulaires en forme de L (21) et une paroi externe de chaque unité d'armoire (1) forment une rainure d'encastrement en trapèze (11), chaque pilier d'encastrement (22) avec une section transversale en double trapèze est encastré dans la rainure d'encastrement en trapèze (11), et deux unités d'armoire adjacentes (1) sont raccordées par le pilier d'encastrement (22) ;
**caractérisée en ce que** le pilier d'encastrement (22) est pourvu d'une unité étirable (3), l'unité étirable (3) comprend un manchon (30) raccordé de manière fixe à un intérieur du pilier d'encastrement (22), une tige étirable (31) raccordée de manière coulissante à un intérieur du manchon (30), et un assemblage élastique d'extension-rétractation (32) prévu dans le manchon (30) pour entraîner la tige étirable (31) à s'étendre ou à se rétracter, dans laquelle lorsqu'une extrémité de la tige étirable (31) est poussée pour étendre la tige étirable (31), une longueur de la tige étirable (31) est suffisamment longue pour être tenue par une main humaine ; et dans laquelle un côté de la rainure d'encastrement (21) est rempli d'une cale en bois (4) pour éviter un déplacement du pilier d'encastrement (21).

2. Armoire combinée selon la revendication 1, dans laquelle, une plaque d'insertion (12) ayant une section transversale en trapèze est encastrée dans la rainure d'encastrement (11).

3. Armoire combinée selon la revendication 1, dans laquelle, un support (13) pour séparer l'armoire combinée du sol est en outre raccordé en dessous de l'armoire combinée.

4. Armoire combinée selon la revendication 1, dans laquelle, chaque unité d'armoire (1) est pourvue d'une ouverture à une extrémité avant, et l'ouverture est pourvue d'une plaque d'enveloppement (14), d'une porte d'armoire (15), d'un tiroir (16), ou d'une plaque de séparation (17).

5. Armoire combinée selon la revendication 4, dans laquelle, chaque unité d'armoire (1) est pourvue d'une ouverture à une extrémité arrière, et l'ouverture est pourvue d'une plaque d'enveloppement (14) ou d'une porte d'armoire (15).

6. Armoire combinée selon la revendication 1, dans laquelle, le manchon (30) est pourvu symétriquement de deux ensembles de tiges étirables (31) et d'assemblages élastiques d'extension-rétraction (32) pour entraîner les tiges étirables (31).

7. Armoire combinée selon l'une quelconque des revendications 1 ou 6, dans laquelle, l'assemblage élastique d'extension-rétraction (32) comprend une plaque d'appui (320), un ressort (321), un élément de verrouillage de position (322), un élément de poussée (323) et un élément de limitation (324), dans laquelle
la plaque d'appui (320) est parallèle à une surface d'extrémité du manchon (30) et montée serrée à une partie médiane du manchon (30) ;
le ressort (321) est placé sur la plaque d'appui (320) ;
l'élément de verrouillage de position (322) comprend un pilier d'insertion (3220) et quatre plaques d'insertion (3221) disposées sur une paroi externe du pilier d'insertion (3220) dans un cercle avec un axe du pilier d'insertion (3220) comme un centre du cercle, et une extrémité de la plaque d'insertion (3221) éloignée du ressort (321) est configurée comme une surface en forme de coin (3222) ;
l'élément de poussée (323) comprend huit blocs d'arrêt (3230) disposés sur une périphérie externe de la tige étirable (31) dans un cercle avec l'axe de la tige étirable (31) comme le centre du cercle, et des dents en forme de coin à espacement égal (3231) réparties à une extrémité de la tige étirable (31) près de l'élément de verrouillage de position (322) ; il y a huit dents en forme de coin (3231) au total, les positions des huit dents en forme de coin (3231) correspondent aux positions des blocs d'arrêt (3230), et les surfaces inclinées des dents en forme de coin (3231) sont équipées de surfaces en forme de coin (3222) de la plaque d'insertion (3221) ; et
l'élément de limitation (324) comprend une enveloppe de verrouillage (3240) avec une ouverture à une extrémité, quatre rainures de limitation à espacement égal (3242) et quatre canaux de coulissement à espacement égal (3241) disposés sur une paroi interne de l'enveloppe de verrouillage (3240) ; dans laquelle les rainures de limitation (3242) et les canaux de coulissement (3241) sont répartis en alternance, et forment un espacement égal ; un côté de l'enveloppe de verrouillage (3240) éloigné de l'ouverture est pourvu d'un trou traversant, la tige étirable (31) passe à travers le trou traversant ; la tige étirable (31) entraîne les blocs d'arrêt (3230) à coulisser dans les rainures formées par les rainures de limitation (3242) et les canaux de coulissement (3241), et le pilier d'insertion (3220) entraîne la plaque d'insertion (3221) à coulisser dans un espace formé par les quatre canaux de coulissement (3241).

8. Armoire combinée selon la revendication 7, dans laquelle, l'unité étirable (3) est en matière plastique.

9. Armoire combinée selon la revendication 8 dans laquelle, l'armoire combinée comprend en outre une plaque de protection (5), la plaque de protection enveloppe une périphérie d'un tout solidaire formé par toutes les unités d'armoire (1).
